# EUROPÄISCHE PATENTANMELDUNG

(11) **EP 4 552 454 A1**
(43) Veröffentlichungstag der Anmeldung: **14.05.2025**
(21) Anmeldenummer: 24203498.1
(22) Anmeldetag: 30.09.2024
(51) Int. Cl.: A01B 69/04

(54) **LANDWIRTSCHAFTLICHE ARBEITSMASCHINE**

(30) Priorität: 08.11.2023 DE 102023130888
(71) Anmelder: CLAAS KGaA mbH, 33428 Harsewinkel (DE)
(72) Erfinder: Kemme, Sebastian, 49134 Wallenhorst (DE); Reuter, Heiner, 06456 Arnstein (DE); Verploegen, Thijs, 40625 Düsseldorf (DE)
(74) Vertreter: CLAAS Gruppe

(57) **Zusammenfassung**

Die Erfindung betrifft eine landwirtschaftliche Arbeitsmaschine (3) mit einem Anbaugerät (4), wobei die landwirtschaftliche Arbeitsmaschine (3) eine Steuerungseinrichtung (5) umfasst, die dazu vorgesehen und eingerichtet ist die landwirtschaftliche Arbeitsmaschine (3) in einem Automatikmodus derart anzusteuern, sodass diese eine Fläche (6) mit einer vorgeplanten Bearbeitungsstrategie (7) autonom bearbeitet, wobei die vorgeplante Bearbeitungsstrategie (7) eine abzufahrende Route (8) und die entlang der Route (8) einzustellenden Arbeitsparameter der landwirtschaftlichen Arbeitsmaschine (3) und/oder des Anbaugeräts (4) umfasst, wobei die landwirtschaftliche Arbeitsmaschine (3) eine Kabine (13) mit Steuerungselementen (9) umfasst, die zum manuellen Steuern und/oder Regeln der Arbeitsparameter der landwirtschaftlichen Arbeitsmaschine (3) und/oder des Anbaugeräts (4) vorgesehen und eingerichtet sind, wobei die Steuerungseinrichtung (5) derart eingerichtet ist, dass bei einer Betätigung eines der Steuerungselemente (9) im Automatikmodus die Bearbeitungsstrategie fortgesetzt wird und einer der Arbeitsparameter und/oder die abzufahrende Route (8) während einer Betätigung des Steuerungselements (9) übersteuert wird.

## Beschreibung

Die Erfindung betrifft eine landwirtschaftliche Arbeitsmaschine gemäß dem Oberbegriff des Anspruchs 1. Die landwirtschaftliche Arbeitsmaschine kann beispielsweise als Traktor ausgebildet sein und umfasst eine Steuerungseinrichtung die dazu vorgesehen und eingerichtet ist die landwirtschaftliche Arbeitsmaschine in einem Automatikmodus zu betreiben. Im Automatikmodus wird anhand einer vorgeplanten Bearbeitungsstrategie eine landwirtschaftliche Fläche autonom bearbeitet. Hierbei umfasst die vorgeplante Bearbeitungsstrategie sämtliche Informationen, die zur Bearbeitung der Fläche erforderlich sind. Demgemäß sind keine Eingriffe eines Bedieners der landwirtschaftlichen Arbeitsmaschine zur Bearbeitung der Fläche erforderlich. Die hier in Rede stehende landwirtschaftliche Arbeitsmaschine weist zusätzlich eine Kabine auf, in der ein Bediener der landwirtschaftlichen Arbeitsmaschine Platz findet. Innerhalb der Kabine befinden sich die üblichen und an sich bekannten Steuerungselementen, welche zum manuellen Bedienen der landwirtschaftlichen Arbeitsmaschine vorgesehen und eingerichtet sind. Mithin kann die Maschine sowohl im Automatikmodus die Fläche selbsttätig bearbeiten, aber auch manuell durch einen Bediener gesteuert werden. Im Automatikmodus ist es nicht erforderlich, dass sich ein Bediener in der Kabine befindet.

Eine derartige landwirtschaftliche Arbeitsmaschine ist beispielsweise aus der EP 4 086 721 B1 bekannt. Für den Fall, dass die landwirtschaftliche Arbeitsmaschine im Automatikmodus betrieben wird und sich dennoch ein Bediener innerhalb der Kabine befindet und eines der Steuerungselemente manuell betätigt, wird in der aus dem Stand der Technik bekannten landwirtschaftlichen Arbeitsmaschine ein Bremsvorgang erzwungen. Die so zum Stillstand gebrachte landwirtschaftliche Arbeitsmaschine kann nunmehr in einem manuellen Betriebszustand händisch betrieben werden, oder der Automatikmodus wird fortgesetzt. Ein Wechsel zwischen dem Automatikmodus und einem manuellen Betrieb der Arbeitsmaschine ist somit nur mit einer vollständigen Unterbrechung des Arbeitsprozesses möglich.

Dies ist insofern nachteilig, dass ein erfahrener Bediener in bestimmten Situationen eine kurzzeitige Anpassung vereinzelter Arbeitsparameter zur Optimierung des Arbeitsprozesses an sich kurzzeitig ändernde Begebenheiten der zu bearbeitenden Fläche vorsehen würde. Eine kurzzeitige manuelle Anpassung eines Parameters ist im Automatikmodus der EP 4 086 721 B1 nicht möglich. Es kann lediglich der autonome Arbeitsprozess unterbrochen und anschließend im manuellen Betrieb fortgesetzt werden.

Es ist deshalb Aufgabe der Erfindung die beschriebenen Nachteile des Standes der Technik zu vermeiden und insbesondere eine landwirtschaftliche Arbeitsmaschine zu schaffen, die im Automatikmodus ein Übersteuern einzelner Arbeitsparameter erlaubt.

Diese Aufgabe wird erfindungsgemäß durch die kennzeichnenden Merkmale des Anspruchs 1 gelöst.

Gemäß dem Anspruch 1 wird eine landwirtschaftliche Arbeitsmaschine mit einem Anbaugerät vorgeschlagen, wobei die landwirtschaftliche Arbeitsmaschine eine Steuerungseinrichtung umfasst, die dazu vorgesehen und eingerichtet ist die landwirtschaftliche Arbeitsmaschine in einem Automatikmodus derart anzusteuern, sodass diese eine Fläche mit einer vorgeplanten Bearbeitungsstrategie autonom bearbeitet, wobei die vorgeplante Bearbeitungsstrategie eine abzufahrende Route und die entlang der Route einzustellenden Arbeitsparameter der landwirtschaftlichen Arbeitsmaschine und/oder des Anbaugeräts umfasst, wobei die landwirtschaftliche Arbeitsmaschine eine Kabine mit Steuerungselementen umfasst, die zum manuellen Steuern und/oder Regeln der Arbeitsparameter der landwirtschaftlichen Arbeitsmaschine und/oder des Anbaugeräts vorgesehen und eingerichtet sind, wobei die Steuerungseinrichtung derart eingerichtet ist, dass bei einer Betätigung eines der Steuerungselemente im Automatikmodus die Bearbeitungsstrategie fortgesetzt wird und einer der Arbeitsparameter und/oder die abzufahrende Route während einer Betätigung des Steuerungselements übersteuert wird.

Die Erfindung hat viele Vorteile. Dadurch, dass ein Bediener in den Betrieb der Arbeitsmaschine im Automatikmodus mittels einer Betätigung eines Steuerungselements eingreifen kann, kann dieser die voreingestellten Arbeitsparameter übersteuern. Demgemäß ist es möglich, dass ein Bediener aufgrund unerwarteter Begebenheiten der zu bearbeitenden Fläche eine Anpassung der Arbeitsparameter vornehmen kann. Besonders vorteilhaft ist es, dass lediglich der einem betätigten Steuerungselement zugeordnete Arbeitsparameter übersteuert wird und währenddessen der Betrieb der Arbeitsmaschine im Automatikmodus mit den weiteren Arbeitsparametern der Bearbeitungsstrategie kontinuierlich fortgesetzt wird.

Eine vorteilhafte Weiterbildung sieht vor, dass die Steuerungseinrichtung derart eingerichtet ist, dass lediglich während der Betätigung eines der Steuerungselemente von einem in der vorgeplanten Bearbeitungsstrategie hinterlegten Arbeitsparameter, welcher dem Steuerungselement zugeordnet ist, abgewichen wird. Mithin kann die Steuerungseinrichtung nach einem Steuerungseingriff durch den Bediener automatisch den Betrieb der Arbeitsmaschine gemäß der vorgeplanten Bearbeitungsstrategie fortsetzen.

Eine weitere vorteilhafte Weiterbildung sieht vor, dass die Steuerungselemente an einer Armlehne angeordnet sind. Bei derartigen Steuerungselementen handelt es sich um die üblicherweise in einer Arbeitsmaschine vorhandenen Steuerungselemente, mit dessen Funktionen ein Bediener vertraut ist. Mithin kann der Bediener mit den ihn bekannten Steuerungselementen in den Automatikmodus zum Übersteuern eines Arbeitsparameters eingreifen.

Gemäß einer weiteren vorteilhaften Weiterbildung umfasst die Armlehne einen Armlehnenbereich zur Ablage eines Arms und Steuerungselemente, die als Bedienfeld, Display und/oder Griffsteuermittel, das auf einen Joystick angeordnet ist, ausgebildet sind.

Besonders vorteilhaft ist es, wenn die einzustellenden Arbeitsparameter eine Geschwindigkeit der Arbeitsmaschine, eine Position einer Anhängervorrichtung, eine Konfiguration der Hydraulikanschlüsse und/oder die Drehzahl einer Zapfwelle umfassen.

Eine vorteilhafte Ausgestaltung sieht vor, dass die Steuerungseinrichtung derart eingerichtet ist, sodass die Steuerungseinrichtung Daten, die eine Betätigung der Steuerungselemente im Automatikmodus betreffen speichert und/oder einer externen Speichervorrichtung bereitstellt, wobei vorzugsweise die Daten den durch das Steuerungselement eingestellten Parameter und eine Position auf der Fläche umfassen. Diese Daten können von der Steuerungseinrichtung oder einer externen Datenverarbeitungseinrichtung bei der Ermittlung der Bearbeitungsstrategie nachfolgender Arbeitsvorgänge berücksichtigt werden, um bei späteren Arbeitsvorgängen durch einen Bediener ausgeführte Steuerungseingriffe in den Automatikmodus zu reduzieren.

Weitere vorteilhafte Ausgestaltungen sind Gegenstand weiterer Unteransprüche und werden nachfolgend an Hand eines in mehreren Figuren dargestellten Ausführungsbeispiels beschrieben. Es zeigen:
- Figur 1: eine schematische Darstellung einer Maschinenanordnung;
- Figur 2: eine schematische Darstellung einer vorgeplanten Route auf einer zu bearbeitenden Fläche;
- Figur 3: eine schematische Darstellung eines Fahrersitzes mit daran angeordneten Steuerungselementen.

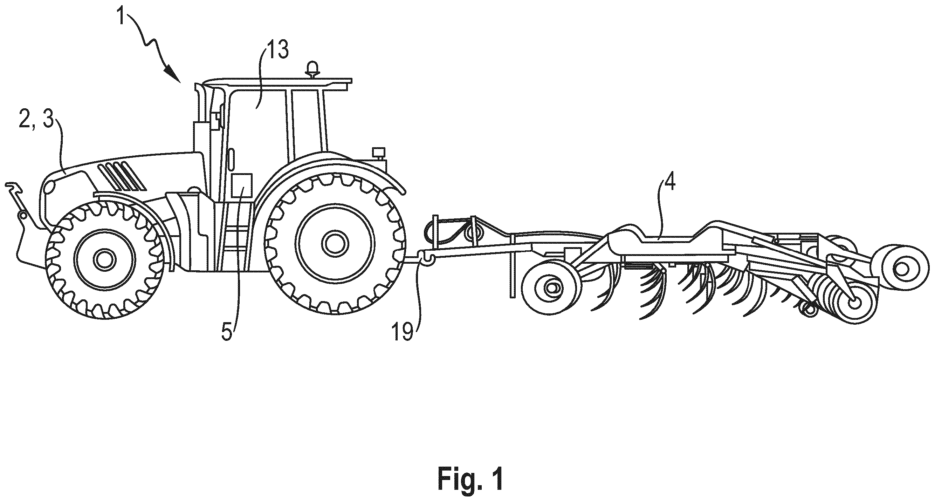

Die in Fig. 1 dargestellte landwirtschaftliche Maschinenanordnung 1 umfasst eine als Traktor 2 ausgeführte landwirtschaftliche Arbeitsmaschine 3 und zumindest ein an die Arbeitsmaschine 3 adaptiertes, als Bodenbearbeitungsgerät - hier als sogenannte Eggeausgeführtes Anbaugerät 4. Es liegt im Rahmen der Erfindung, dass das Anbaugerät 4 als beliebiges Anbaugerät ausgeführt ist. In noch näher zu beschreibender Weise umfasst die landwirtschaftliche Arbeitsmaschine 3 eine Steuerungseinrichtung 5, die den Betrieb der Arbeitsmaschine 3 und des Anbaugerätes 4 steuert.

Die Steuerungseinrichtung 5 ist dazu vorgesehen und eingerichtet die landwirtschaftliche Arbeitsmaschine 3 in einem Automatikmodus anzusteuern. Im Automatikmodus steuert die Steuerungseinrichtung 5 die landwirtschaftliche Arbeitsmaschine 3 derart an, sodass diese eine Fläche 6 mit einer vorgeplanten Bearbeitungsstrategie 7 autonom bearbeitet. Hier und vorzugsweise bedeutet autonom, dass sämtliche Arbeitsorgane und Arbeitsparameter der landwirtschaftlichen Arbeitsmaschine 3 und des Anbaugeräts 4 zur Bearbeitung der Fläche 6 bzw. während der Bearbeitung der Fläche 6 automatisch eingestellt werden. Hierbei bearbeitet die Arbeitsmaschine 3 die Fläche 6 mittels der vorgeplanten Bearbeitungsstrategie 7, ohne dass ein Eingriff eines Fahrers in den Arbeitsprozess erforderlich ist.

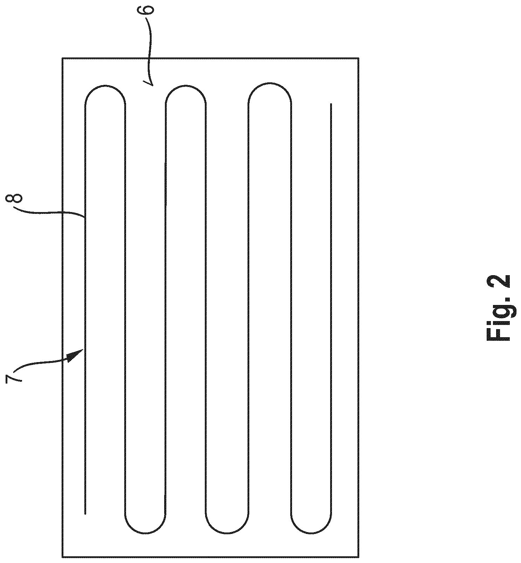

Die in Fig. 2 dargestellte vorgeplante Bearbeitungsstrategie 7 umfasst Informationen über eine abzufahren Route 8, entlang derer die Arbeitsmaschine 3 im Automatikmodus automatisch von der Steuerungseinrichtung 5 geführt wird. Die abzufahrende Route 8 umfasst weitere Arbeitsparameter, wie beispielsweise die Geschwindigkeit mit der verschiedene Routenabschnitte befahren werden. Weiterhin kann die vorgeplante Bearbeitungsstrategie 7 Informationen einer Position einer Anhängervorrichtung 19 umfassen, mittels derer das Anbaugerät 4 an der Arbeitsmaschine 3 adaptiert ist. Auch eine Konfiguration der Hydraulikanschlüsse der landwirtschaftlichen Arbeitsmaschine 3 können einen Gegenstand der vorgeplanten Bearbeitungsstrategie 7 bilden. Als Konfiguration der Hydraulikanschlüsse sind hier und vorzugsweise die zu aktivierenden bzw. deaktivierenden Hydraulikanschlüsse, sowie die Einstellung des Hydraulikdrucks zu verstehen. Alternativ oder zusätzlich sind in der vorgeplanten Bearbeitungsstrategie 7 Informationen zum Betreiben einer Zapfwelle, insbesondere eine Drehzahl der Zapfwelle enthalten.

Die Steuerungseinrichtung 5 ist zum Ermitteln der vorgeplanten Bearbeitungsstrategie 7 vorgesehen und eingerichtet. Zur Erstellung der Bearbeitungsstrategie 7 sind vorab die Arbeitsmaschine 3, die Art des Anbaugeräts 4, ein Arbeitsauftrag, beispielsweise Pflügen, und/oder die zu bearbeitende Fläche 7 auszuwählen. Anhand dieser Informationen wird die Bearbeitungsstrategie 7 von der Steuerungseinrichtung 5 erstellt oder von einer externen Datenverarbeitungseinrichtung empfangen.

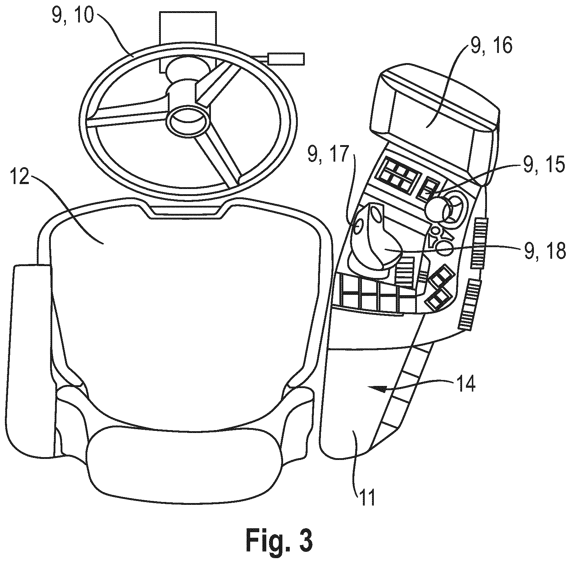

Obwohl die landwirtschaftliche Arbeitsmaschine 3 zum Bearbeiten der Fläche 6 im Automatikmodus keinen Bediener benötigt, umfasst die Arbeitsmaschine 3 eine Kabine 13 mit Steuerungselementen 9 zum manuellen Steuern und Regeln der Arbeitsparameter. Die an sich bekannten Steuerungselemente 9 sind exemplarisch in Fig. 3 dargestellt. Diese umfassen zumindest ein Lenkrad 10 und weitere Steuerungselemente 9, die an einer Armlehne 11 eines Fahrersitzes 12 angeordnet sind. Hier und vorzugsweise umfasst die Armlehne 11 einen Armlehnenbereich 14 und Steuerungselemente, die als Bedienfeld 15, Display 16 und Griffsteuermittel 17, dass auf einem Joystick 18 angeordnet ist, ausgebildet sind. Hierbei kann das Bedienfeld 15 mehrere mechanische Tasten umfassen.

Die Steuerungseinrichtung 5 ist derart eingerichtet, dass bei einer Betätigung eines der Steuerungselemente 9 während eines Betriebes im Automatikmodus eine Bearbeitung der Fläche 6 kontinuierlich fortgesetzt wird und ein Arbeitsparameter durch die Betätigung des Steuerungselements 9 übersteuert wird. Insofern es sich bei dem Steuerungselement 9 um das Lenkrad 10 handelt, wird von der in der Bearbeitungsstrategie 7 vorgesehene Route 8 während einer Betätigung des Lenkrad 10 abgewichen. Sobald ein Steuereingriff durch das Betätigen eines Steuerungselements 9 beendet wird, setzt die Steuerungseinrichtung 5 automatisch die Bearbeitung der Fläche 6 mit den Arbeitsparametern gemäß der vorgeplanten Bearbeitungsstrategie 7 und der vorgeplanten Route 8 fort. Mithin wird lediglich während der Betätigung eines Steuerungselements 9 von einen Arbeitsparameter und/oder der Route 8 der vorgeplanten Bearbeitungsstrategie 7 abgewichen.

Hier und vorzugsweise speichert die Steuerungseinrichtung 5 Daten ab, die Informationen über die Betätigung eines Steuerungselements 9 im Automatikmodus umfassen. Alternativ oder zusätzlich können diese Daten auch einer externen Speichervorrichtung übermittelt werden. Diese Daten umfassen den durch das Steuerungselement 9 veränderten Parameter und eine Position auf der Fläche 6, an der der Steuereingriff in den Betrieb im Automatikmodus durchgeführt wurde.

### Bezugszeichenliste:

- 1: Maschinenanordnung
- 2: Traktor
- 3: Arbeitsmaschine
- 4: Anbaugerät
- 5: Steuerungseinrichtung
- 6: Fläche
- 7: Bearbeitungsstrategie
- 8: Route
- 9: Steuerungselement
- 10: Lenkrad
- 11: Armlehne
- 12: Fahrersitz
- 13: Kabine
- 14: Armlehnenbereich
- 15: Bedienfeld
- 16: Display
- 17: Griffsteuermittel
- 18: Joystick
- 19: Anhängervorrichtung

## Patentansprüche

1. Landwirtschaftliche Arbeitsmaschine (3) mit einem Anbaugerät (4),
wobei die landwirtschaftliche Arbeitsmaschine (3) eine Steuerungseinrichtung (5) umfasst, die dazu vorgesehen und eingerichtet ist die landwirtschaftliche Arbeitsmaschine (3) in einem Automatikmodus derart anzusteuern, sodass diese eine Fläche (6) mit einer vorgeplanten Bearbeitungsstrategie (7) autonom bearbeitet, wobei die vorgeplante Bearbeitungsstrategie (7) eine abzufahrende Route (8) und die entlang der Route (8) einzustellenden Arbeitsparameter der landwirtschaftlichen Arbeitsmaschine (3) und/oder des Anbaugeräts (4) umfasst,
wobei die landwirtschaftliche Arbeitsmaschine (3) eine Kabine (13) mit Steuerungselementen (9) umfasst, die zum manuellen Steuern und/oder Regeln der Arbeitsparameter der landwirtschaftlichen Arbeitsmaschine (3) und/oder des Anbaugeräts (4) vorgesehen und eingerichtet sind,
**dadurch gekennzeichnet, dass**
die Steuerungseinrichtung (5) derart eingerichtet ist, dass bei einer Betätigung eines der Steuerungselemente (9) im Automatikmodus die Bearbeitungsstrategie fortgesetzt wird und einer der Arbeitsparameter und/oder die abzufahrende Route (8) während einer Betätigung des Steuerungselements (9) übersteuert wird.

2. Landwirtschaftliche Arbeitsmaschine (3) mit einem Anbaugerät (4) nach Anspruch 1, **dadurch gekennzeichnet, dass** die Steuerungseinrichtung (5) derart eingerichtet ist, dass lediglich während der Betätigung eines der Steuerungselemente (9) von einem in der vorgeplanten Bearbeitungsstrategie (7) hinterlegten Arbeitsparameter, welcher dem betätigten Steuerungselement (9) zugeordnet ist, abgewichen wird.

3. Landwirtschaftliche Arbeitsmaschine (3) mit einem Anbaugerät (4) nach einem der Ansprüche 1 oder 2, **dadurch gekennzeichnet, dass** die Steuerungselemente (9) an einer Armlehne (11) eines Fahrersitzes (12) angeordnet sind.

4. Landwirtschaftliche Arbeitsmaschine (3) mit einem Anbaugerät (4) nach Anspruch 3, **dadurch gekennzeichnet, dass** die Armlehne (11) einen Armlehnenbereich (14) und Steuerungselemente (9) umfasst, die als Bedienfeld (15), Display (16) und/oder Griffsteuermittel (17), das auf einem Joystick (18) angeordnet ist, ausgebildet sind.

5. Landwirtschaftliche Arbeitsmaschine (3) mit einem Anbaugerät (4) nach einem der Ansprüche 1 bis 4, **dadurch gekennzeichnet, dass** die einzustellenden Arbeitsparameter eine Geschwindigkeit der landwirtschaftlichen Arbeitsmaschine (3), eine Position einer Anhängervorrichtung (19), eine Konfiguration der Hydraulikanschlüsse und/oder die Drehzahl einer Zapfwelle umfassen.

6. Landwirtschaftliche Arbeitsmaschine (3) mit einem Anbaugerät (4) nach einem der Ansprüche 1 bis 5, **dadurch gekennzeichnet, dass** die Steuerungseinrichtung (5) derart eingerichtet ist, sodass die Steuerungseinrichtung (5) Daten, die eine Betätigung der Steuerungselemente (9) im Automatikmodus betreffen speichert und/oder einer externen Speichervorrichtung bereitstellt, wobei vorzugsweise die Daten den durch das Steuerungselement (9) eingestellten Arbeitsparameter und eine Position auf der Fläche (6) umfassen.
